# EUROPÄISCHE PATENTANMELDUNG

(11) **EP 0 990 874 A1**
(43) Veröffentlichungstag der Anmeldung: **05.04.2000**
(21) Anmeldenummer: 99119315.2
(22) Anmeldetag: 29.09.1999
(51) Int. Cl.: G01D 7/00, G01C 21/20, G01P 1/08

(54) **Anzeigevorrichtung**

(30) Priorität: 02.10.1998 DE 19845579
(71) Anmelder: Mannesmann VDO Aktiengesellschaft, 60388 Frankfurt am Main (DE)
(72) Erfinder: Brandt, Peter, 63739 Aschaffenburg (DE)
(74) Vertreter: Klein, Thomas, Dipl.-Ing.

(57) **Zusammenfassung**

Die Erfindung betrifft eine Anzeigevorrichtung, insbesondere für ein Kraftfahrzeug, mit einem Zeiger, einer Skala und einer elektrooptischen Anzeige, wobei mit dem Zeiger an der Skala Meßwerte analog darstellbar sind und zumindest ein Teilbereich der elektrooptischen Anzeige entlang der Bewegungsbahn des Zeigers angeordnet ist.

Um eine hohe Informationsdichte bei gleichzeitig guter Ablesbarkeit der Anzeige zu schaffen, schlägt die Erfindung vor, daß die elektrooptische Anzeige ein entlang zumindest eines Abschnitts der Bewegungsbahn des Zeigers verlaufendes erstes Anzeigefeld mit ansteuerbaren Anzeigesegmenten und ein zweites, frei ansteuerbares Anzeigefeld aufweist.

## Beschreibung

Die Erfindung betrifft eine Anzeigevorrichtung, insbesondere für ein Kraftfahrzeug, mit einem Zeiger, einer Skala und einer elektrooptischen Anzeige, wobei mit dem Zeiger an der Skala Meßwerte analog darstellbar sind und zumindest ein Teilbereich der elektrooptischen Anzeige entlang der Bewegungsbahn des Zeigers angeordnet ist.

Derartige Anzeigevorrichtungen sind bekannt und werden vor allem in Kraftfahrzeugen zur Anzeige einer Fahrgeschwindigkeit oder einer Motordrehzahl verwendet. Die elektrooptische Anzeige weist dabei Anzeigesegmente vorgegebener, unveränderbarer Form auf. Eine Darstellung von beliebigen Informationen oder Graphiken ist damit nicht möglich.

Andere bekannte Anzeigevorrichtungen mit einem analogen Zeigerrundinstrument und einem von dem Zeiger überstrichenen Display zur Darstellung veränderbarer Informationen weisen eine große ansteuerbare Skalenfläche auf, wobei sämtliche Anzeigeelemente einschließlich der Skalenteilungen variabel ansteuerbar und auf dem Display darstellbar sind. Die Größe der ansteuerbaren Displayfläche ist unmittelbar ein Maß für die Herstellungskosten des Displays und somit des Anzeigeinstruments, womit diese bekannten Anzeigeinstrumente sehr kostspielig sind. Darüber hinaus ist die Darstellung auf dem Display auf eine aus einzelnen, in etwa quadratischen Bildpunkten zusammengesetzte Darstellungsweise beschränkt, wodurch bogenförmige Elemente nur angenähert und die Ablesbarkeit erschwerend mit stufenartigen Sprüngen darstellbar sind. Dieses ist insbesondere nachteilig bei der (runden) Skala zugeordneten Anzeigeelementen.

Der Erfindung liegt daher die Aufgabe zugrunde, eine Anzeigevorrichtung vorgenannter Art so zu gestalten, daß sie eine analoge Darstellung von Meßwerten mit einem Zeigerinstrument sowie eine freizügige Wiedergabe von Informationen einschließlich mit der Skala korrespondierender Anzeigen der elektrooptischen Anzeige bei gleichzeitig niedrigen Herstellungskosten für die Anzeigevorrichtung bietet.

Diese Aufgabe wird erfindungsgemäß dadurch gelöst, daß die elektrooptische Anzeige ein entlang zumindest eines Abschnitts der Bewegungsbahn des Zeigers verlaufendes erstes Anzeigefeld mit ansteuerbaren Anzeigesegmenten und ein zweites, frei ansteuerbares Anzeigefeld aufweist.

Damit können in einfacher Weise auf den beiden Anzeigefeldern unabhängig voneinander verschiedenartige Darstellungen erscheinen. So kann das erste Anzeigefeld vorgegebene Anzeigesegmente aufweisen, die der Geometrie der Skala und der Bewegungsbahn des Zeigers angepaßt sind. Eine einfache und sichere Ablesbarkeit der mit dem Zeiger an der Skala dargestellten Meßwerte sowie weiterer, durch Ansteuerung der Anzeigesegmente visualisierter Informationen ist durch das erste Anzeigefeld gewährleistet. Die Anzahl der Anzeigesegmente dieses Anzeigefeldes kann dabei vergleichsweise gering sein, da nur eine begrenzte Anzahl von Geometrien darzustellen ist. Durch die Anpassung der Anzeigesegmente an die erforderlichen Geometrien werden unerwünschte Treppenstufen in der Darstellung vermieden. Das zweite, frei ansteuerbare Anzeigefeld dient hingegen einer freien Informationsdarstellung. Hier können z. B. Graphiken wie Wegweisungen eines Navigationssystems, Videosequenzen oder fallweise Warnsignale angezeigt werden. Auf dieser Weise verbindet die erfindungsgemäße Anzeigevorrichtung eine freie Darstellbarkeit vielfältiger Informationen mit einer sicheren und einfachen Instrumentenablesbarkeit. Damit wird eine hohe Informationsdichte bei gleichzeitig guter Ablesbarkeit der Anzeige verwirklicht.

Es wäre vorstellbar, für die elektrooptische Anzeige eine Kathodenstrahlröhre oder ein Vakuum-Fluoreszenz-Display zu verwenden. Besonders kostengünstig und in großen Stückzahlen herstellbar ist die Anzeigevorrichtung jedoch, wenn die elektooptische Anzeige vorteilhaft ein Flüssigkristall-Display aufweist. Insbesondere beim Einsatz in Kraftfahrzeugen bietet das Flüssigkristall-Display weitere Vorteile, da es eine nur geringe elektrische Energieaufnahme besitzt und durch seine flache Bauweise lediglich geringen Einbauraum erfordert.

Kostengünstig und einfach herstellbar ist die elektrooptische Anzeige, wenn gemäß einer anderen vorteilhaften Weiterbildung der Erfindung das FlüssigkristallDisplay ein TN- oder STN-Display ist. Derartige Displays sind zudem sehr betriebssicher und insbesondere STN-Displays weisen eine gute Ablesbarkeit auch unter extremen Blickwinkeln auf.

Gemäß einer anderen vorteilhaften Weiterbildung der Erfindung weist das Display das erste Anzeigefeld mit ansteuerbaren Anzeigesegmenten und das zweite, frei ansteuerbare Anzeigefeld in derselben Anzeigeebene auf, so daß zum einen die Anzahl der zur Herstellung des Displays erforderlichen Fertigungsgänge niedrig ist und zum anderen eine gute, exakte und parallaxefreie gleichzeitige Ablesbarkeit der beiden Anzeigefelder gewährleistet ist.

Die Ansteuerung der elektrooptischen Anzeige läßt sich vorteilhaft vereinfachen, wenn diese zwei optisch in Reihe angeordnete Flüssigkristall-Displays aufweist. Dabei ist vorzugsweise das erste Anzeigefeld mit ansteuerbaren Segmenten auf einem ersten der Flüssigkristall-Displays und das zweite, frei ansteuerbare Anzeigefeld auf dem zweiten Flüssigkristall-Display angeordnet. Auf diese Weise können die Displays optimal an die unterschiedlichen Anforderungen angepaßt ausgelegt werden, wobei auch eine gegenseitige elektrische Beeinflussung weitestgehend ausgeschlossen werden kann. Es ist hiermit auch in einfacher Weise möglich z. B. ein Display mit einem an eine vorgegebene Skala angepaßten ersten Anzeigefeld mit ansteuerbaren Anzeigesegmenten vorzusehen und das dazu optisch in Reihe angeordnete Flüssigkristall-Display mit dem zweiten, frei ansteuerbaren Anzeigefeld individuellen Wünschen und Anforderungen entsprechend wahlweise als Monochrom- oder Farb-Display zu wählen.

Eine besonders freizügige und großflächige Informationsdarstellung (beispielsweise Abspielen eines Videofilms), die insbesondere dann interessant ist, wenn auf dem ersten Anzeigefeld (z. B. beim Stillstand des Fahrzeuges) keine Darstellung erfolgt, ist vorzugsweise dann zu erreichen, wenn sich die Anzeigefelder zumindest teilweise überdecken.

Der erforderliche Einbauraum für eine zwei optisch in Reihe angeordnete Flüssigkristall-Displays aufweisende elektrooptische Anzeige ist gemäß einer anderen vorteilhaften Weiterbildung der Erfindung besonders gering, wenn die elektrooptische Anzeige ein DSTN-Display aufweist.

Eine maximale bauliche Integration der Elemente der Anzeige läßt sich erreichen, wenn die elektrooptische Anzeige vorteilhaft ein mindestens zwei elektrisch voneinander getrennte und unabhängig ansteuerbare Elektrodenlagen auf einem Substrat aufweisendes Multilayer-Flüssigkristall-Display aufweist. Obwohl mit einer solchen Bauform weiterhin mehrere Anzeigefelder darstellbar sind, ist hierfür lediglich eine einzelne Flüssigkristallzelle mit einer vorderen und einer hinteren, jeweils Elektroden tragenden Wand, wobei zwischen den Wänden eine Flüssigkristallsubstanz eingeschlossen ist, erforderlich. Besonders günstig und die Bauform vereinfachend ist es dabei, wenn mit einer ersten der Elektrodenlagen das erste Anzeigefeld mit ansteuerbaren Anzeigesegmenten und mit der zweiten Elektrodenlage das zweite, frei ansteuerbare Anzeigefeld darstellbar ist.

Eine besonders große Informationsvielfalt ist mit der Anzeigevorrichtung freizügig darstellbar, wenn das zweite, frei ansteuerbare Anzeigefeld vorzugsweise ein in einem Multiplexverfahren ansteuerbares Punkt-Matrix-Feld ist. Mit Hilfe des Multiplexverfahrens ist dabei trotz einer Ansteuerbarkeit einer großen Anzahl von Bildpunkten ein vergleichsweise nur geringer baulicher Aufwand für die Anzeigevorrichtung zu betreiben.

Gemäß einer anderen vorteilhaften Weiterbildung der Erfindung ist das zweite, frei ansteuerbare Anzeigefeld in einem Anti-Aliasing-Verfahren ansteuerbar. Damit wird eine Bildglättung erreicht, die - insbesondere auch bei einer Darstellung von sich bewegenden Bildern - zu einer klaren Anzeige und somit zu einer besseren Ables- und Erkennbarkeit führt.

Man könnte sich vorstellen, auf der elektrooptischen Anzeige dunkle Zeichen auf einem hellen Hintergrund darzustellen. Jedoch wird dadurch die Ablesbarkeit erschwert, insbesondere kann es bei geringer Umgebungshelligkeit durch die große Hintergrundfläche zu einer Blendwirkung für einen Betrachter kommen. Da in Kraftfahrzeugen mit einer verringerten Ablesbarkeit von Anzeigeinstrumenten unmittelbar auch die Verkehrssicherheit sinkt, sind derartige Nachteile zu vermeiden. Es ist daher von besonderem Vorteil, wenn mit der elektrooptischen Anzeige helle Zeichen auf einer dunklen Anzeigefläche darstellbar sind.

Ein besonders guter Kontrast zwischen den dargestellten Zeichen und der den Anzeigehintergrund bildenden übrigen Anzeigefläche sowie der nichtselektierten Zeichen wird vorteilhaft dann erzielt, wenn nichtselektierte Anzeigeelemente mit einer eine geringste Transmission aufweisenden Ansteuerspannung (Unterschwingbereich) ansteuerbar sind. Dabei wird der bei Flüssigkristallzellen vorherrschende Effekt, wonach eine zwischen einer eine hohe Transmission hervorrufenden Ansteuerspannung und einer eine niedrige Transmission verursachenden Nichtansteuerspannung gelegene Ansteuerspannung zu einer minimalen Transmission der Flüssigkristallzelle führt, ausgenutzt.

Der Zeiger der Anzeigevorrichtung kann z. B. eine Linearbewegung entlang einer geradlinigen Skala zur Anzeige von Meßwerten ausführen. Eine derartige Anzeigevorrichtung ist jedoch schlecht ablesbar, da der gesamte Anzeigebereich mit einem Blick nur schwer erfaßbar ist. Eine schnelle Aussage, die insbesondere in Kraftfahrzeugen erforderlich ist, über die relative Größe des angezeigten Meßwerts ist somit nur schwer möglich. Es ist daher von besonderem Vorteil, wenn gemäß einer anderen vorteilhaften Weiterbildung der Erfindung die Bewegungsbahn des Zeigers ein Kreisbogensegment beschreibt und somit der gesamte Anzeigenbereich des Zeigers in sehr kurzer Zeit zusammen mit der Zeigerstellung erfaßbar ist.

Gemäß einer anderen vorteilhaften Weiterbildung der Erfindung ist mit dem Zeiger eine Fahrgeschwindigkeit anzeigbar und durch Ansteuerung mindestens eines Anzeigesegments des ersten Anzeigefeldes ein Einstellwert einer Geschwindigkeitsregelanlage darstellbar. Auf diese Weise kann unmittelbar im Bereich der Skala und der Bewegungsbahn des Zeigers eine Marke oder eine Band aus Anzeigesegmenten zur Darstellung der voreingestellten Geschwindigkeit genutzt werden. Auf dem zweiten, frei ansteuerbaren Anzeigefeld können darüber hinaus wichtige Betriebsdaten des Fahrzeugs wie Fehlermeldungen oder Navigationshinweise visualisiert werden. Damit bietet die erfindungsgemäße Anzeigevorrichtung eine umfassende und leicht ables- und erfaßbare Informationsdarstellung für einen Fahrzeugführer, wodurch dessen mögliche Ablenkung vom Verkehrsgeschehen auf ein minimales, unumgängliches Maß reduziert ist.

Die Erfindung wird im folgenden anhand von in der beigefügten Zeichnung dargestellten Ausführungsbeispielen näher erläutert. Es zeigt:
- Figur 1: eine Anzeigevorrichtung in Vorderansicht,
- Figur 2: ein Zifferblatt und Anzeigesegmente der Anzeigevorrichtung in Vorderansicht,
- Figur 3: zwei Flüssigkristall-Displays einer elektrooptischen Anzeige in perspektivischer Ansicht und
- Figur 4: ein Multilayer-Flüssigkristall-Display in geschnittener Ansicht.

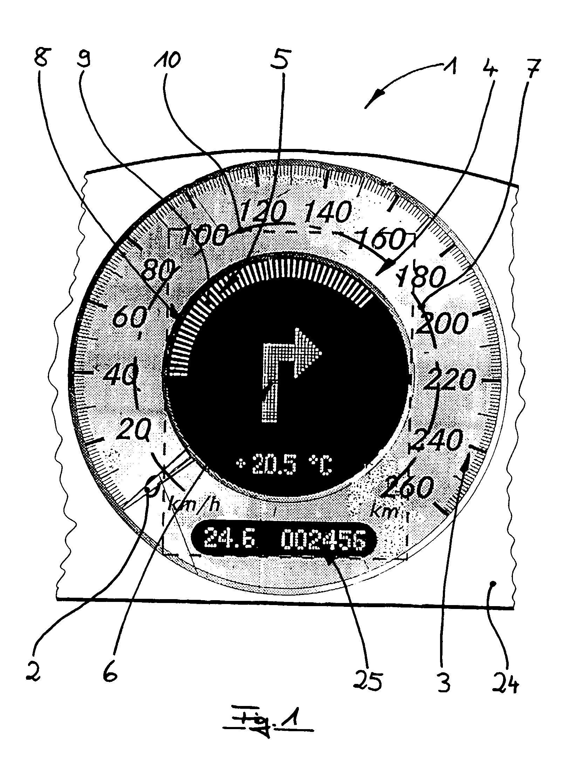

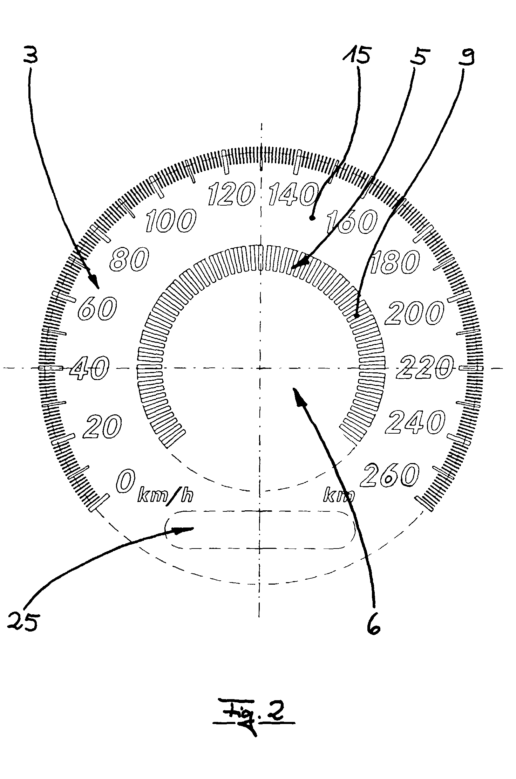

In Figur 1 ist eine Anzeigevorrichtung 1, die Bestandteil eines hier nicht weiter dargestellten Kombinationsinstrumentes eines Kraftfahrzeugs ist, gezeigt. Die Anzeigevorrichtung 1 weist eine kreissegmentförmige Skala 3 auf, an der mittels eines entlang einer Bewegungsbahn 7 verschwenkbaren Zeigers 2 eine Fahrgeschwindigkeit des Kraftfahrzeugs darstellbar ist. Der Zeiger 2 ist dabei als Scheibenzeiger mit durchsichtigem Zentralbereich oder als Ringzeiger ausgebildet und wird über den Umfang der Scheibe oder des Rings angetrieben. Der Zeigerantrieb ist von einer Blende 24 verdeckt. In dem um die Schwenkachse des Zeigers 2 gebildeten Zentralbereich ist eine ein Flüssigkristall-Display 10, von dem lediglich ein mittlerer Teilbereich 8 nicht von einem die Skala 3 aufweisenden Zifferblatt 15 (Figur 2) abgedeckt ist, aufweisende elektrooptische Anzeige 4 angeordnet.

Ein erstes Anzeigefeld 5 mit ansteuerbaren Anzeigesegmenten 9 der elektrooptischen Anzeige 4 verläuft entlang der Bewegungsbahn 7 des Zeigers 2. Im ersten Anzeigefeld 5, daß von einem Band von Anzeigesegmenten 9 gebildet wird, ist eine vorgewählte Fahrgeschwindigkeit einer Geschwindigkeitsregelanlage dargestellt. Der Beginn des Bandes aus angesteuerten Anzeigesegmenten 9 bei einem Skalenwert von 40 km/h bedeutet, daß ab dieser unteren Grenzgeschwindigkeit die Geschwindigkeitsregelanlage aktivierbar ist. Der obere Grenzwert von in etwa 175 km/h gibt die vorgewählte Fahrgeschwindigkeit wieder.

Ein weiteres Anzeigefeld 6 der elektrooptischen Anzeige 4 ist frei ansteuerbar und zeigt ein Wegweisersymbol eines Navigationssystems sowie eine Außentemperatur (+ 20,5 °C) an. Zur freien Informationsdarstellung ist das zweite Anzeigefeld 6 als Punkt-Matrix mit einzeln ansteuerbaren Bildpunkten ausgebildet. In einem dritten, im unteren Bereich der Anzeigevorrichtung 1 angeordneten Anzeigefeld 25 befindet sich eine Wegstreckenanzeige mit einer Angabe der gesamten zurückgelegten Wegstrecke (2456 km) sowie der seit einem gewählten Fixpunkt (z. B. Fahrtbeginn) absolvierten Strecke (24,6 km).

Zur weiteren Verdeutlichung zeigt Figur 2 die Skala 3, die in herkömmlicher Weise als Zifferblatt 15 in Form einer bedruckten Folie ausgebildet ist, zusammen mit den frei ansteuerbaren Feldern 6, 25 sowie dem ansteuerbare Anzeigesegmente 9 aufweisenden Anzeigefeld 5. Es ist zu erkennen, daß die Anzeigesegmente 9 derart angeordnet sind, daß damit Anzeigewerte zwischen 0 und 260 km/h dargestellt werden können. An Stelle des in Figur 1 dargestellten, von angesteuerten Anzeigesegmenten 9 gebildeten Bandes können auch nur einzelne Anzeigesegmente 9 angesteuert werden, die die vorgewählte Fahrgeschwindigkeit der Geschwindigkeitsregelanlage visualisieren. Darüber hinaus kann mit den Anzeigesegmenten 9 z. B. auch die Drehzahl des Fahrzeugmotors angezeigt werden. In diesem Fall ist neben der Skala 3 eine weitere, Drehzahlwerte angebende Skala vorzusehen.

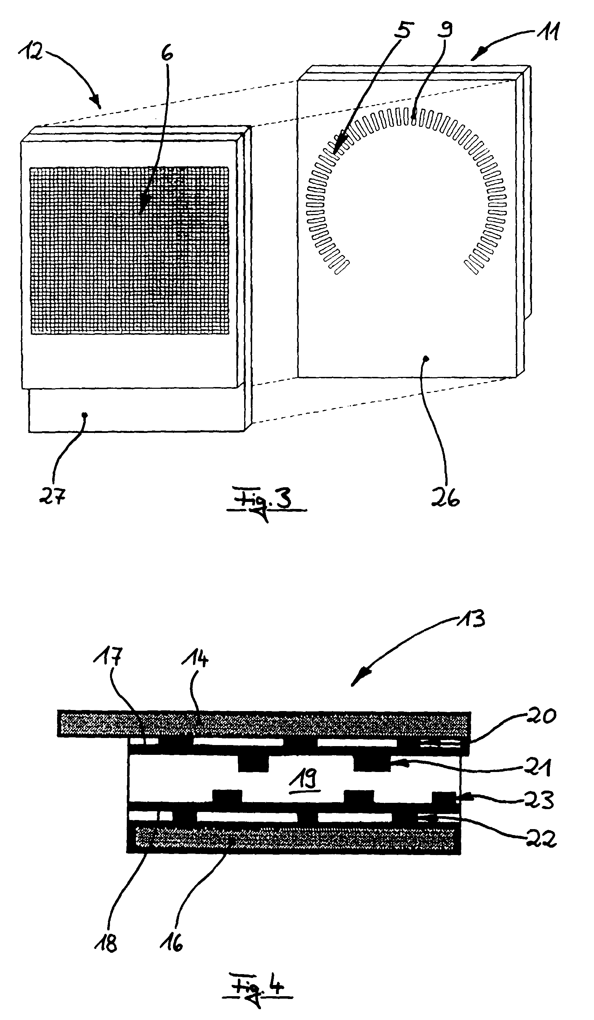

Nach dem in Figuren 1 und 2 gezeigten Ausführungsbeispiel ist ein einzelnes Flüssigkristall-Display 10 für die elektrooptische Anzeige 4 vorgesehen. Dadurch ist die Anzeigefläche des zweiten, frei ansteuerbaren Anzeigefeldes 6 auf einen nicht von dem ersten Anzeigefeld 5 belegten Bereich beschränkt. Um die Bildfläche des zweiten Anzeigefeldes 6 zu erhöhen, wenn in dem ersten Anzeigefeld eine Darstellung nicht erforderlich ist (z. B. bei Stillstand des Kraftfahrzeugs oder bei ausgeschalteter Geschwindigkeitsregelanlage), ist gemäß Figur 3 vorgesehen, für die elektrooptische Anzeige ein erstes Flüssigkristall-Display 11 und ein zweites Flüssigkristall-Display 12 optisch in Reihe anzuordnen.

Das erste Flüssigkristall-Display 11 weist dabei ein erstes Anzeigefeld 5 mit ansteuerbaren Anzeigesegmenten 9 und das zweite Flüssigkristall-Display 12 ein zweites Anzeigefeld 6, das frei ansteuerbar ist und von einer Punkt-Matrix gebildet wird, auf. Elektrische Anschluß- und Kontaktierungsbereiche 26, 27 der Flüssigkristall-Displays 11, 12 sind hier nicht detailliert dargestellt. Das erste Flüssigkristall-Display 11 ist besonders einfach ausgeführt, da nur eine geringe Anzahl von Bildsegmenten direkt ansteuerbar ist. Das als Punkt-Matrix-Display ausgeführte zweite Flüssigkristall-Display 12 wird in einem Multiplex-Verfahren angesteuert.

An Stelle der zwei Displays 11, 12 aus Figur 3 kann, wie in Figur 4 dargestellt, ein einzelnes Multilayer-Flüssigkristall-Display 13 für die elektrooptische Anzeige verwendet werden. Das Display 13 weist auf einem vorderen Substrat 14 aufgebrachte und durch eine Isolationsschicht 17 voneinander getrennte Elektrodenlagen 20, 21 auf, die mit auf ein hinteres Substrat 16 aufgebrachten und durch eine Isolationsschicht 18 elektrisch voneinander getrennten Elektrodenlagen 22, 23 korrespondieren. Zwischen dem vorderen Substrat 14 und dem hinteren Substrat 16 ist eine Flüssigkristall-Substanz 19 eingeschlossen. Zwischen jeweils korrespondierenden ersten Elektrodenlagen 20, 22 und zweiten Elektrodenlagen 21, 23 befindliche Flüssigkristall-Substanz ist durch Anlegen von Spannung an ausgewählte Elektroden ansteuerbar.

## Patentansprüche

1. Anzeigevorrichtung, insbesondere für ein Kraftfahrzeug, mit einem Zeiger, einer Skala und einer elektrooptischen Anzeige, wobei mit dem Zeiger an der Skala Meßwerte analog darstellbar sind und zumindest ein Teilbereich der elektrooptischen Anzeige entlang der Bewegungsbahn des Zeigers angeordnet ist, **dadurch gekennzeichnet**, daß die elektrooptische Anzeige (4) ein entlang zumindest eines Abschnitts der Bewegungsbahn (7) des Zeigers (2) verlaufendes erstes Anzeigefeld (5) mit ansteuerbaren Anzeigesegmenten (9) und ein zweites, frei ansteuerbares Anzeigefeld (6) aufweist.

2. Anzeigevorrichtung nach Anspruch 1, **dadurch gekennzeichnet**, daß die elektrooptische Anzeige (4) ein Flüssigkristall-Display (10; 11, 12; 13) aufweist.

3. Anzeigevorrichtung nach Anspruch 2, **dadurch gekennzeichnet**, daß das Flüssigkristall-Display (10; 11,12; 13) ein TN- oder STN-Display ist.

4. Anzeigevorrichtung nach Anspruch 2 oder 3, **dadurch gekennzeichnet**, daß das Display (10; 11, 12; 13) das erste Anzeigefeld (5) mit ansteuerbaren Anzeigesegmenten (9) und das zweite, frei ansteuerbare Anzeigefeld (6) in derselben Anzeigeebene aufweist.

5. Anzeigevorrichtung nach Anspruch 2 oder 3, **dadurch gekennzeichnet**, daß die elektrooptische Anzeige (4) zwei optisch in Reihe angeordnete Flüssigkristall-Displays (11, 12) aufweist.

6. Anzeigevorrichtung nach Anspruch 5, **dadurch gekennzeichnet**, daß das erste Anzeigefeld (5) mit ansteuerbaren Segmenten (9) auf einem ersten der Flüssigkristall-Displays (11) und das zweite, frei ansteuerbare Anzeigefeld (6) auf dem zweiten Flüssigkristall-Display (12) angeordnet ist.

7. Anzeigevorrichtung nach Anspruch 6, **dadurch gekennzeichnet**, daß sich die Anzeigefelder (5, 6) zumindest teilweise überdecken.

8. Anzeigevorrichtung nach einem der Ansprüche 5 bis 7, **dadurch gekennzeichnet**, daß die elektrooptische Anzeige (4) ein DSTN-Display aufweist.

9. Anzeigevorrichtung nach einem der Ansprüche 2 bis 8, **dadurch gekennzeichnet**, daß die elektrooptische Anzeige (4) ein mindestens zwei elektrisch voneinander getrennte und unabhängig ansteuerbare Elektrodenlagen (20, 21) auf einem Substrat aufweisendes Multilayer-Flüssigkristall-Display (13) aufweist.

10. Anzeigevorrichtung nach Anspruch 9, **dadurch gekennzeichnet**, daß mit einer ersten der Elektrodenlagen (20) das erste Anzeigefeld (5) mit ansteuerbaren Anzeigesegmenten (9) und mit der zweiten Elektrodenlage (21) das zweite, frei ansteuerbare Anzeigefeld (6) darstellbar ist.

11. Anzeigevorrichtung nach einem der vorhergehenden Ansprüche, **dadurch gekennzeichnet**, daß das zweite, frei ansteuerbare Anzeigefeld (6) ein in einem Multiplexverfahren ansteuerbares Punkt-Matrix-Feld ist.

12. Anzeigevorrichtung nach einem der vorhergehenden Ansprüche, **dadurch gekennzeichnet**, daß das zweite, frei ansteuerbare Anzeigefeld (6) in einem Anti-Aliasing-Verfahren ansteuerbar ist.

13. Anzeigevorrichtung nach einem der vorhergehenden Ansprüche, **dadurch gekennzeichnet**, daß mit der elektrooptischen Anzeige (4) helle Zeichen auf einer dunklen Anzeigefläche darstellbar sind.

14. Anzeigevorrichtung nach Anspruch 13, **dadurch gekennzeichnet**, daß nichtselektierte Anzeigeelemente mit einer eine geringste Transmission aufweisenden Ansteuerspannung (Unterschwingbereich) ansteuerbar sind.

15. Anzeigevorrichtung nach einem der vorhergehenden Ansprüche, **dadurch gekennzeichnet**, daß die Bewegungsbahn (7) des Zeigers (2) ein Kreisbogensegment beschreibt.

16. Anzeigevorrichtung nach einem der vorhergehenden Ansprüche, **dadurch gekennzeichnet**, daß mit dem Zeiger (2) eine Fahrgeschwindigkeit anzeigbar ist und daß durch Ansteuerung mindestens eines Anzeigesegments (9) des ersten Anzeigefeldes (5) ein Einstellwert einer Geschwindigkeitsregelanlage darstellbar ist.
